(19) Europäisches Patentamt
European Patent Office
Office européen des brevets

(11) Publication number: **0 013 469**
**B1**

(12) **EUROPEAN PATENT SPECIFICATION**

(45) Date of publication of patent specification: **11.01.84**

(51) Int. Cl.³: **C 10 M 1/32, C 10 M 3/26, C 07 F 11/00, C 10 L 1/22**

(21) Application number: **79301930.8**

(22) Date of filing: **18.09.79**

(54) **Molybdenum complexes of ashless oxazoline dispersants, their preparation, a concentrate thereof, and their application as friction reducing antiwear additives for lubricating oils and gasoline.**

(30) Priority: **18.09.78 US 943206**
**18.09.78 US 943342**

(43) Date of publication of application:
**23.07.80 Bulletin 80/15**

(45) Publication of the grant of the patent:
**11.01.84 Bulletin 84/2**

(84) Designated Contracting States:
**BE DE FR GB IT NL**

(56) References cited:
**FR - A - 2 378 849**
**GB - A - 882 295**
**GB - A - 1 085 903**
**GB - A - 1 483 681**
**GB - A - 1 483 682**
**US - A - 4 035 309**
**US - A - 4 062 786**

(73) Proprietor: **Exxon Research and Engineering Company**
**P.O.Box 390 180 Park Avenue**
**Florham Park New Jersey 07932 (US)**

(72) Inventor: **Ryer, Jack**
**61 Jensen Street**
**East Brunswick New Jersey (US)**
Inventor: **Winans, Esther Deffley**
**508 Outlook Avenue**
**Colonia New Jersey (US)**
Inventor: **Brois, Stanley James**
**804 Coolidge Street**
**Westfield New Jersey (US)**
Inventor: **Gutierrez, Antonio**
**22 Tar Heels Road**
**Mercerville New Jersey (US)**
Inventor: **Coupland, Keith**
**102 Mayfair Drive**
**Sarnia Ontario (CA)**
Inventor: **Salva, Juan Miquelu**
**381 London Road**
**Sarnia Ontario (CA)**
Inventor: **Smith, Clinton Richard**
**King Street RR No. 1,**
**Camlachie Ontario (CA)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 013 469 B1**

Courier Press, Leamington Spa, England.

(74) Representative: **Bawden, Peter Charles**
**Esso Chemical Research Centre PO Box 1**
**Abingdon**
**Oxfordshire OX13 6BB (GB)**

# Molybdenum complexes of ashless oxazline dispersants, their preparation, a concentrate thereof, and their application as friction reducing antiwear additives for lubricating oils and gasoline

The present invention concerns oil-soluble molybdenum complexes of oxazoline dispersants, their method of preparation, and the use of oil-soluble molybdenum oxazoline dispersants as lubricating oil additives, which markedly improve the sludge dispersancy-friction reducing properties of lubricating oils employed for crankcase lubrication of internal combustion engines. According to one embodiment of the invention, the oxazolines used are lactone oxazolines.

During the past decade, ashless sludge dispersants have become increasingly important, primarily in improving the performance of lubricants in keeping the engine clean of deposits and permitting extended crankcase oil drain periods while avoiding the undesirable environmental impact of the earlier used metal-containing additives. One commercial types of ashless dispersant contains nitrogen resulting from the attachment of an amine or polyamine to a long-chain hydrocarbon polymer (the oil-solublizing portion of the molecule), usually polyisobutylene, through an acid group, e.g. polyisobutenyl succinic anhydride, by forming amide or imide linkages. Other known dispersants include the reaction products of hydrocarbon-substituted succinic anhydride, e.g. polyisobutenylsuccinic anhydride, with compounds containing both an amine group and a hydroxy group, such as shown in United Kingdom Specification 948,409, which teaches ashless amide//imide/ester-type lubricant additives prepared by reacting an alkylensuccinic anhydride, said alkenyl group having 30 to 700 carbon atoms, with a hydroxy amine including THAM.

U.K. Patent Specification 1,483,681—2 teach that the reaction of a hydrocarbyl dicarboxylic acid material, i.e. acid or anhydride or ester, with certain classes of amino alcohols under certain conditions, including metal salt promotion, will result in products containing one or two heterocyclic ring structures, namely, an oxazline ring. Oil-soluble lactone oxazolines are disclosed in U.S. Patent 4,062,786.

U.K. Specification 882,295 teaches a salt of molybdic acid and an amine having the formula

$$R-\underset{\displaystyle R_2}{\overset{\displaystyle R_1}{\underset{|}{\overset{|}{C}}}}-NH_2$$

wherein $R_1$ and $R_2$ are the same or different straight chain alkyl radicals having up to four carbons in the radical and R is an alkyl radical with the proviso that the radicals $R_1$ and $R_2$ have a total of 16 to 50 carbons to be useful as a friction-reducing additive for mineral oil lubricants when a sulfur-containing compound, e.g. zinc dialkyl dithiophoshate, is present. The salt has been produced by heating the molybdic acid and amine in a reaction mixture of mineral oil and water (page 1, line 70 — page 2, line 5).

While there are many known lubricant additives which may be classified as antiwear, antifriction and extreme pressure agents and some may in fact satisfy more than one of these functions as well as provide other useful functions but rarely if ever dispersancy, it is also known that many of these additives act in a different physical or chemical manner and often compete with one another, e.g. they may compete for the surface of the moving metal parts which are subjected to lubrication.

The metal dihydrocarbyl dithiophosphates, e.g. the zinc dialkyl dithiophosphates, are one of the additives which are known to exhibit antioxidant and antiwear properties. While they give excellent oxidation resistances and exhibit superior antiwear properties, it has heretofore been believed that the same increase or significantly limits their ability to decrease friction between moving surfaces. As a result, compositions containing zinc dialkyl dithiophosphates were not believed to provide the most desirable lubricity and, in turn, it was believed that use of compositions containing the same would lead to significant energy losses in overcoming friction even when antifriction agents are included in the composition.

Known ways to solve the problem of energy losses due to high frication in crankcase lubrication include the use of synthetic ester base oils which are expensive and the use of insoluble molybdenum sulfide and graphite dispersions which have the disadvantage of giving the oil composition a black or hazy appearance. It would be desirable then to provide oil-soluble molybdenum compounds and thus overcome the disadvantage. Oil-soluble molybdenum additives taught as useful in lubricating oils include the molybdates of organic nitrogen bases obtained from heating an aqueous solution of molybdic acid and an aliphatic amine or heterocyclic nitrogen base (see U.S. Patent 3,144,712).

The practical exploitation of various types of molybdenum compounds and complexes as lubricant additives has been hindered not only by their insolubility and/or corrosiveness but also by low thermal stability.

It has now been discovered that ashless oxazoline dispersants can be reacted with a source of molybdenum to provide a molybdenum-containing ashless dispersant of improved thermal stability in hydrocarbons, preferably lubricating oils and having the property of giving enhanced lubricity to said lubricating oil and this invention provides such a complex reaction product.

The product has been made by a process using an aqueous/non-aqueous reaction medium and the invention also provides such a process. The complexes are useful in lubricating oil compositions comprising a major proportion of mineral oil and a minor but friction-reducing amount of the molybdenum-containing ashless oxazoline lubricating oil dispersant, the complexes are also useful as gasoline additives and the invention is also concerned with such uses. The dispersant oxazoline complex thus contains from 0.5 to 20 wt.% molybdenum based on the weight of said dispersant, and contains from one to two oxazoline rings and a substantially saturated oil-solubilising hydrocarbon group containing at least 50 carbon atoms attached to an acid group. If the lactone modification is used, then the dispersant also contains from one to two lactone rings.

These materials are prepared from conventional ashless oxazoline dispersants by reaction of said dispersant with a molybdenum compound in a binary solvent system comprising an aqueous component of the class consisting of water and ammonium hydroxide and a non-aqueous component of the class consisting of mineral oil, tetrahydrofuran (THF) and a hydrocarbon boiling between 70 and 250°C. The volume ratio of aqueous to non-aqueous component ranges from 1:1000 to 1:1, preferably 1:100 to 1:4, optimally 1:10. The aqueous component can be considered a promoter for the molybdation of the oxazoline dispersant. Thus, both the water and the ammonium hydroxide could be defined as an essential promoter of molybdation in a non-aqueous reaction medium.

It has now been further discovered that a stable molybdenum complex can be obtained with little if any destruction of the ashless dispersant when complexing is effected at a temperature of 40°C. to 250°C., preferably from 50 to 200°C., in said binary solvent system.

In accordance with the present invention, it is preferred that the friction-reducing additive is present in the mineral oil in an amount to provide from about 0.01 to 2.0, preferably 0.2—1.0 and optimally 0.05—0.5, weight percent molybdenum in said oil. All weight percent being based on the total weight of the lubricating composition.

In preferred form, the molybdenum complex is that of an oxazoline dispersant additive derived from the reaction of one mole of a hydrocarbyl-substituted dicarboxylic acid material such as polyisobutenyl succinic anhydride wherein said hydrocarbyl substituent, e.g. the polyisobutenyl group has a ($\bar{M}_n$) ranging from about 700 to 5,600, optimally from about 900 to 1600, with from one to two, preferably 1.5 to 2, molar equivalents of a 2,2-disubstituted-2-amino-1-alkanol having 2 to 3 hydroxy groups and containing a total of 4 to 8 carbon atoms by heating at a temperature of from 140°C. to 240°C. until cessation of water evolution. In preparing the lactone oxazoline modification, one mole of the hydrocarbon-substituted lactone acid material, such as polyisobutenyl lactone acid, is reacted with one mole equivalent of said 2,2-disubstituted-2-amino-1-alkanol. In each case, said additives being complexes with from 1 to 3 molar equivalents of molybdic oxide, i.e. $MoO_3$ and containing from 0.5 to 20, preferably 2 to 10, optimally 5, wt.% molybdenum.

Generally, the dicarboxylic acid material, i.e. acid or anhydride or ester which is used to produce the oxazoline dispersants for complexing with molybdenum includes alpha-beta unsaturated $C_4$ to $C_{10}$ dicarboxylic acid, or anhydrides or esters thereof, such as fumaric acid, itaconic acid, maleic acid, maleic anhydride, chloromaleic acid, dimethyl fumarate, etc. These unsaturated acid materials are converted to the corresponding saturated acid material when reacted with a reactant having a long-chain hydrocarbyl group. The long-chain hydrocarbyl group, preferably a hydrocarbon chaincontaining at least 50 carbons (branched or unbranched), is generally an olefin polymer chain, whereby oil-solubility is provided.

In general, these hydrocarbyl-substituted dicarboxylic acid materials and their preparation are well known; for example, see. U.S. Patents 3,219,666; 3,172,892; 3,272,746; the aforementioned prior art patents; as well as being commercially available, e.g., polyisobutenyl succinic anhydride.

The dicarboxylic acid material can be illustrated by an alkenyl-substituted anhydride which may contain a single alkenyl radical or a mixture of alkenyl radicals variously bonded to the cyclic succinic anhydride group.

The anhydride can be obtained by well-known methods, such as the Ene reaction between an olefin and maleic anhydride or halo-succinic anhydride or succinic ester (U.S. Patent 2,568,876).

Suitable olefins include octene, decene, dodecene, tetradecene, hexadecene, octadecene, eicosene, and polymers of propylene, butene, isobutene, pentene, decene and the like, and halogen-containing olefins. The olefins may also contain cycloalkyl and aromatic groups.

Preferred olefin polymers for reaction with the unsaturated dicarboxylic acids are polymers containing a major molar amount of $C_2$ to $C_5$ monoolefin, e.g., ethylene, propylene, butylene, isobutylene and pentene. The polymers can be homopolymers such as polyisobutylene, as well as copolymers of two or more of such olefins such as copolymers of: ethylene and propylene; butylene and isobutylene; propylene and isobutylene; etc. Other copolymers include those in which a minor amount of the copolymer monomers, e.g., 1 to 20 mole % is a $C_4$ to $C_{18}$ non-conjugated diolefin, e.g., a copolymer of isobutylene and butadiene; or a copolymer of

ethylene, propylene and 1,4-hexadiene; etc.

The olefin polymers will usually have number average molecular weights ($\overline{M}_n$) within the range of about 700 and about 6,000, more usually between about 900 and about 5,600. Particularly useful olefin polymers have ($\overline{M}_n$)s of about 1200 to 5000 with approximately one terminal double bond per polymer chain. An especially valuable starting material for a highly potent dispersant additive are polyalkenes e.g., polyisobutylene, having about 90 carbons.

The hydrocarbyl substituent may also be a copolymer of 30 to 80 wt.% ethylene and 20 to 70 wt.% of one or more $C_3$ to $C_{18}$ alpha-olefin, preferably propylene having a number average molecular weight of 700 to 250,000, preferably 10,000 to 200,000 as determined by vapor pressure osmometry (VPO). Terpolymers of ethylene, said alpha-olefin and 0.5 to 20 mol %, based on said total polymer, of a non-conjugated diolefin, such as a hexadiene, may also be used. The hydrocarbyl substituent may also be a hydrogenated copolymer of butadiene and styrene or a terpolymer of a butadiene and styrene and isoprene. If the hydrocarbyl group has a molecular weight above 10,000 then the molybdenum containing dispersant also has viscosity-index improving properties.

Generally, useful oil-soluble oxazoline reaction products and their methods of preparation are fully described in United Kingdom Specifications 1,483,681—2. This oxazoline dispersant which forms a portion of the inventive combination can be characterized in its preferred form as an oil-soluble product obtained from heating together a molar equivalent of a hydrocarbon-substituted $C_4$—$C_{10}$ dicarboxylic acid material having more than about 50 carbon atoms per dicarboxylic acyl group and from 1 to 2, preferably 1.5 to about 2, molar equivalents of a 2,2-disubstituted-2-amino-1-alkanol having 2 to 3 hydroxy groups and containing a total of 4 to 8 carbons at a temperature of from about 140°C. to 240°C. until cessation of water evolution indicating completion of the oxazoline reaction. This amino-alkanol which readily produces the oxazoline rings requisite for this dispersant according to this invention can be represented by the formula:

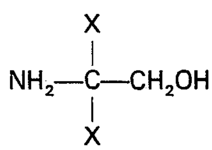

wherein X is an alkyl, or hydroxy alkyl group, with at least one of the X substituents being a hydroxy alkyl group of the structure —$(CH_2)_nOH$, wherein n is 1 to 3.

Examples of such 2,2-disubstituted aminoalkanols, include 2-amino-2-methyl-1,3-propanediol, 2-amino-2-(hydroxy-methyl)-1,3-propanediol (also known as *tris*(hydroxymethyl) aminomethane or THAM), 2-amino-2-ethyl-1,3-propanediol, etc. Because of its effectiveness, availability and cost, the THAM is particularly preferred. It is to be noted that other amino alcohols such as ethanolamine, propanolamine and butanolamine which lack the 2,2-disubstitution, do not afford the oxazoline product. The requisite ($\overline{M}_n$) ranges of these products have already been specified.

The formation of the preferred oxazoline dispersants in high yield, can be effected by adding about 1.0 (to obtain the monooxazoline) to about 2 (to obtain the bisoxazoline) mole equivalent of the aforesaid 2,2-disubstituted-2-amino-1-alkanol per mole equivalent of the dicarboxylic acid material, with or without an inert diluent, and heating the mixture at 140—240°C., preferably 160—205°C., optimally 170—190°C. for $\frac{1}{2}$ to 24, more usually 2 to 8 hours, until the reaction is complete.

Completion of the oxazoline reaction can be readily ascertained by using periodic infrared spectral analysis for following oxazoline formation (oxazoline peak forms at 6.0 microns), or by the cessation of water evolution of about 1.5 to 3.0 moles of water.

Although not necessary, the presence of small amounts, such as 0.01 to 2 wt.%, preferably 0.1 to 1 wt.% based on the weight of the reactants, of a metal salt e.g. zinc acetate can be used in the reaction mixture as a catalyst.

Inert solvents which may be used in the oxazoline reaction include hydrocarbon oils, e.g., mineral lubricating oil, kerosene, neutral mineral oils, xylene, halogenated hydrocarbons, e.g. carbon tetrachloride, dichlorobenzene, tetrahydrofuran, etc. Such solvents can be used in molybdation condensation for complexing reaction with said oxazoline dispersant.

While not known with complete certainty, it is believed that the reaction of the hydrocarbyl-substituted dicarboxylic acid material, e.g., a substituted succinic anhydride with the amino alcohol of the invention, e.g., about 1.5 to 2 equivalents of 2,2-disubstituted-2-amino-methanol such as *tris*-hydroxymethylamino-methane (THAM), gives oxazoline, e.g. a mixture of monooxazoline and bisoxazoline to all bisoxazoline via the intermediacy of several discrete reaction species such as a hemi-ester and an amic acid amine salt which upon heating goes to the final bisoxazoline product.

Generally, useful lactone oxazoline reaction products and their methods of preparation are fully described in United States Patent 4,062,786. This lactone oxazoline dispersant can be characterized in part as a reaction product obtained from heating together an equimolar mixture of a hetero or non-hetero hydrocarbon-substituted lactone acid material selected from the group consisting of acids, amides and esters, and a 2,2-disubstituted-2-amino-1-alkanol having 1 to 3 hydroxy groups and containing a total of 4 to 8 carbons at a

temperature of from 100°—240°C. until infrared absorption for oxazoline is maximal indicating completion of the oxazoline reaction. These reaction products can be represented in part by the formula:

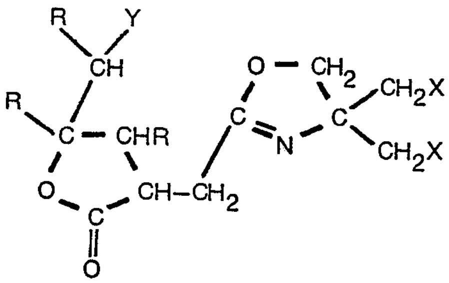

wherein R is selected from the group consisting of hydrogen and alkyl radicals containing from 1 to 400 or more carbons, X is selected from the group consisting of an alkyl or hydroxy alkyl group and at least one of the X substituents and preferably both of the X substituents being a hydroxy alkyl group of the structure $—(CH_2—)_nOH$ where n is 1 to 3 and Y is selected from the group consisting of hydrogen, hydroxyl, sulfo, alkylthio (TS—), alkyldithio (TSS—), and a sulfur bridge, e.g., —S and —S—S—, joining two lactone oxazoline units together as depicted below wherein z is a number ranging from 1 to 4 and T is defined hereafter as containing 1 to 50, preferably 2 to 20 carbons.

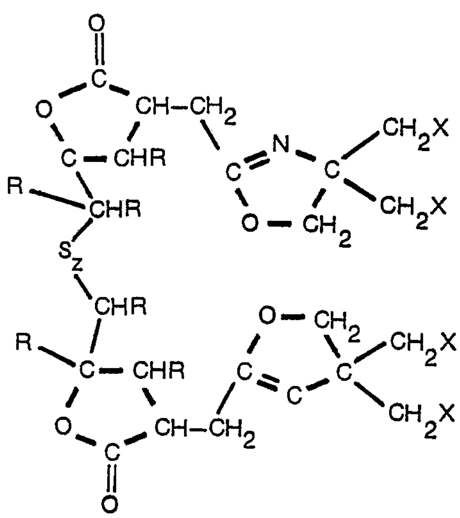

Preferred herein is polyisobutyl lactone oxazoline of number average molecular weight ranging up to 100,000 prepared by the reaction of equimolar proportions of polyisobutyl lactone carboxylic acid with tris-[hydroxymethyl] aminomethane (THAM) at a temperature from about 100°—240°C. preferably 150°—180°C. until two moles of $H_2O$ per mole of reactant is removed from the reaction.

The lactone oxazoline dispersants are readily prepared by lactonization of an alkenyl succinic acid analogue obtained via the Ene reaction of an olefin with an alpha-beta unsaturated $C_4$ to $C_{10}$ dicarboxylic acid, or anhydrides or esters thereof, such as fumaric acid, itaconic acid, maleic acid, maleic anhydride, dimethyl fumarate, etc.

These hydrocarbons soluble dispersants have at least 8 carbons in the substantially saturated aliphatic hydrocarbyl group and a carboxylic acid group of the dicarboxylic acid material converted into a lactone ring and another carboxylic acid group converted into an oxazoline ring as a result of the reaction of at least equimolar amounts of said hydrocarbon substituted dicarboxylic acid lactone material and a 2,2-disubstituted-2-amino-1-alkanol having 1 to 3 hydroxy groups and containing a total of 4 to 8 carbons, said amino-alkanol preferably having the formula:

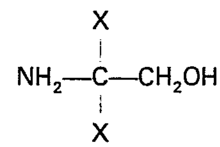

wherein X is alkyl or hydroxy alkyl, said alkyl groups having 1 to 3 carbon atoms, and at least one of said X is a hydroxy alkyl group of the structure $—(CH_2)_nOH$ where n is 1 to 3.

Since it is possible to use alkenyl substituents with the double bond in the 1, 2, or 3-position or even double bonds further out on the hydrocarbyl chain and the size of the lactone ring formed will depend upon, inter alia, the position of the double bond, and which carboxylic acid group participates in the lactone forming reaction, both 5- and 6-ring (or larger ring) lactones are produced and can be used in this invention.

The lactone oxazoline dispersant reagent can include the presence of certain heteroatoms adjacent to the lactone oxazoline ring combination to provide the lactone oxazoline system with other desirable properties such as antioxidation and anticorrosion activity. It is possible to introduce hydroxyl, thiyl, sulfide, sulfoxide, sulfone and sulfo groups adjacent to the lactone oxazoline functions by:

(a) the addition of peracids, hydrocarbyl peroxides or aqueous hydrogen peroxide to alkenyl succinic acid, hemiester or amide reagents or

(b) the epoxidation of alkenyl succinic anhydride, with peracids gives epoxy anhydrides which can react with (1) water, alcohols or amines to generate the desired hydroxy-substituted lactone reactants or (2) directly with THAM to give the lactone oxazoline end products, or

(c) thiyl substituted lactones prepared via (1) thiol-induced scission of epoxy anhydrides or via (2) sulfenyl halide addition to the double bond in alkenyl succinic acids or esters followed by lactonization via an internal displacement of halide.

Oxidation of the mono-thio-bis-lactones with

peroxides can yield both sulfoxides and sulfones. In the case of the dithio-bis-lactones, oxidation affords sulfo-containing lactones. Typical of a hetero substituted lactone oxazoline is mono- or dithio-bis-(polyisobutyl lactone acid).

The amino alcohol used to react with the lactone to provide the oxazoline ring is a 2,2-disubstituted-2-amino-1-alkanol containing a total of 4 to 8 carbon atoms as was earlier discussed.

To further enhance the dispersancy of oxazoline dispersants, the said dispersant, e.g. the alkenyl succinic bisoxazoline, is readily borated by treating said oxazoline dispersant with a boron compound selected from the class consisting of boron oxide, born halides, boron acids and esters of boron acids in a molar ratio of 1:1 to 1:2 of oxazoline dispersant to boron compound. Similarly, the alkyl lactone oxazoline can be borated in the same manner. The resulting borated dispersants can then be molybdated in accordance with this invention. The boration of the oxazoline or lactone oxazoline dispersants is disclosed in U.S. Patent 4,116,876.

Borating is readily carried by adding from about 1 to 3 wt.% (based on the weight of said oxazoline compound) of said boron compound, preferably boric acid which is most usually added as a slurry to said oxazoline dispersant and heating with stirring and at from about 135°C. to 165°C. from 1 to 5 hours followed by nitrogen stripping at said temperature ranges and filtration if desired. In case of the lactone derivative, the temperature should be 60° to 200°C.

The resulting borated oxazolines contain from about 0.1 to 2.0, preferably 0.2 to 0.8 wt.% boron based on the total weight of the borated oxazoline compound. The boron, which appears to be in the reactant dispersant as dehydrated boric acid polymers (primarily $(HBO_2)_3$), attaches chemically to the dispersant imides and diimides as amine salts e.g. the metaborate salt of said diimide and appears not displaced in the molybdenumization step.

Oxazoline formation from the dicarboxylic acid material is usefully carried as a solution reaction with the dicarboxylic acid material, e.g. polyisobutenylsuccinic anhydride dissolved in a solvent such as mineral oil to which the other reactant is added. The formation of the oxazoline dispersants in high yield can be effected by adding from about 1 to 2, preferably about 1.5 to 2.0, molar proportions of said amino alkanol per molar proportion of dicarboxylic acid and thereafter heating the system within the appropriate temperature range until the appropriate amount of water of reaction is evolved. In the case of the lactone modification, about 1 to 1.5 molar proportions of said amino alcohol are reacted with 1 molar proportion of said lactone acid. Typically the solvent mineral oil is adjusted so that it constitutes 50% weight of the final oxazoline dispersant solution. This solution can be readily used for boration as described.

The source of molybdenum is a molybdenum oxygen or sulfur-containing compound capable of complexing with the ash-less dispersant to provide a thermally stable molybdenum complex containing from about 0.5 to 20, preferably 2 to 10, optimally about 5 wt.% molybdenum based on the total weight of said complex. The sources of molybdenum include molybdic trioxide (preferred) also known as polybdic anhydride, ammonium thiomolybdate, ammonium bismolybdate, and ammonium heptamolybdate tetrahydrate; molydenum halides may be used providing they are converted in situ with an oxygen and sulphur containing compound.

The molybdenum oxazoline complex is substantially the product of a binary solution reaction between 1—3 moles of oxazoline dispersant (either the borated or non-borated) and 1 mole of molybdenum metal derived from the molybdenum source. The reaction is readily carried out by reaction at an elevated temperature of from 40°C. to 250°C., preferably 50°C. to 200°C. optimally 60°C. to 180°C. The reaction is carried out in a binary solution system wherein water is present (either as water or ammonium hydroxide) along with a non-aqueous component such as tetrahydrofuran (THF) or a hydrocarbon boiling between 70°C. and 250°C. and as preferred a second non-aqueous component which is a higher boiling point hydrocarbon as mineral oil. A highly useful reaction system is 1 to 20% water, ammonium hydroxide and mixtures thereof, 20 to 60% mineral oil and the balance xylene, toluene or tetrahydrofuran.

The reaction is carried out over a period of from about 4 to 20, preferably 6 to 12, hours in order to suitably stabilize the complex after which the binary solvents are generally removed and the complex dissolved in mineral oil for ease of handling.

Carrying out the organo molybdenum complexing reaction in a binary solvent system of one part by weight water or ammonium hydroxide per 1 to 1000 parts by weight of THF or said lower boiling hydrocarbon provides a number of benefits over a reaction without solvent or in a light aromatic solvent such as toluene or a lighthydrocarbon oil, e.g. mineral oil including: faster reaction time; completion of reaction to a stabilized molybdenum complex at a lower temperature; and, an additive product solution which when added to lubricating oil provides both enhanced friction reduction and sludge dispersancy.

The hydrocarbon-soluble molybdenum complexes of oxazoline dispersants provide not only dispersancy for lubricating oils but enhanced lubricity as well as when used in combination with an active sulfur donor which can be defined as a compound which when used in admixture with the dispersant-molybdenum complex reduces the coefficient of friction at

least about 10% relative to that provided by the complex alone. The active sulfur donor is present in an amount of from about 0.1 to 10, preferably 0.2 to 2, parts by weight per part by weight of molybdenum complex.

Illustrative of active sulfur donors are metal dihydrocarbyl dithiophosphates and the corresponding precursor esters, phosphosulfurized pinenes, sulfurized olefins and hydrocarbons, sulfurized fatty esters and sulfurized alkyl phenols.

Preferred are the zinc dihydrocarbyl dithiophosphates which are salts of dihydrocarbyl esters of dithiophosphoric acids and may be represented by the following formula:

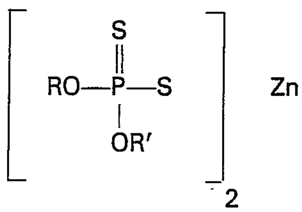

wherein R and R′ may be the same or different hydrocarbyl radicals containing from 1 to 18 and preferably 2 to 12 carbon atoms and including radicals such as alkyl, alkenyl, aryl, aralkyl, alkaryl and cycloaliphatic radicals. Particularly preferred as R and R′ groups are alkyl groups of 2 to 8 carbon atoms. Thus, the radicals may, for example, be ethyl, n-propyl, i-propyl, n-butyl, i-butyl, sec-butyl, tert-butyl, amyl n-hexyl, i-hexyl, n-heptyl, n-octyl decyl, dodecyl, octadecyl, 2-ethylhexyl, phenyl, butylphenyl, cyclohexyl, methylcyclopentyl, propenyl, butenyl, etc. In order to obtain oil solubility, the total number of carbon atoms in the dithiophosphoric acid will average about 5 or greater.

The zinc dihydrocarbyl dithiophosphates which are useful as the coadditive, i.e. sulfur donor of the present invention may be prepared in accordance with known techniues by first esterifying a dithiophosphoric acid usually by reaction of an alcohol or phenol with $P_2S_5$ and then neutralizing the dithiophosphoric acid ester with a suitable zinc compound such as zinc oxide.

In general, the zinc dihydrocarbyl dithiophosphate will be used in the lubricating composition at a concentration within the range of about 0.01 to about 5 parts by weight per 100 parts of lubricating oil and preferably from about 0.5 to about 1.5. This is adequate for sulfur donation whereby the lubricity enhancement of the lubricating oil composition by the coadditive combination is realized.

Equally suitable active sulfur donors are the oil-soluble dihydrocarbyl esters of dithiophosphoric acid; particularly, the dibutylphenyl dithiophosphate.

The phosphorosulfurized terpenes, as represented by pinene, dipentene, allo-ocimene, etc., are another group of dithiophosphate diesters which are active sulfur donors. Of the terpenes, the bicyclic pinene is preferred. The phosphosulfurized terpene is readily obtained by reaction of about one mole of diester of thiophosphoric acid and one mole of pinene at a temperature of at least 100°C., e.g. 100°C. to 200°C. The preferred active sulfur donor can be characterized as the bornyl ester of dihydrocarbyl ($C_2$—$C_{20}$) dithiophosphoric acids (as shown in US—A—2,689,258).

The sulfurized olefins and hydrocarbons are further esters of thiophosphoric acids which are useful sulfur donors. These esters are achieved by reaction with olefins such as ethylene, propylene, isobutylene, decene, dodecene, octadecene, etc., olefin polymers of molecular weight ranging from 100 to 50,000 such as ethylene, propylene, isobutylene, etc., aromatics such as benzene, naphthylene, toluene, xylene, etc., petroleum fractions and condensation products of halogenated aliphatic hydrocarbons with aromatic compounds, e.g. wax naphthalene (see US—A—2,804,431).

The sulfurized fatty esters are another subclass of esters which are active sulfur donors. These products are readily obtained from the reaction of $P_2S_5$ and aliphatic alcohols usefully having from about 8 to 22 carbons obtained from natural sources including linoleic, palmolitic, behenic, stearic, palmitic, lauric, capric, etc., as well as mixtures obtained from vegetable and animal oils, such as tall oil.

The sulfurized alkyl phenols are generally $C_4$ to $C_{20}$ alkyl phenol sulfides. These sulfurized alkyl phenols are readily produced by sulfurizing an alkyl phenol with a sulfur halide or elemental sulfur.

In addition to the molybdenum complex of the oxazoline dispersant and active sulfur donor, the lubricating oil composition may contain other well-known lubricating oil additives to provide trouble-free operation of the lubricated equipment, such as ashless dispersants, metallic detergents, supplemental oxidation and corrosion inhibitors, extreme pressure agents, rust inhibitors, pour point depressants, viscosity index improvers, etc.

As used herein, the terminology "ashless dispersant" in describing both the reactant and the additive is intended to describe the now well-known class of non-metal-containing oil-soluble polymeric additives or the acyl derivatives of relatively high molecular weight carboxylic acids which are capable of dispersing contaminants and the like in hydrocarbons such as lubricating oils. The carboxylic acids may be mono- or polycarboxylic acids and they are generally characterized by substantially hydrocarbon constituents containing an average of 50 to 250 aliphatic carbon atoms.

A preferred class of ashless dispersants are the nitrogen-containing dispersant additives. These dispersants include mineral oil-soluble salts, amides, imides and esters made from high molecular weight mono- and dicarboxylic acids (and where they exist the corresponding acid

anhydrides) and various amines of nitrogen-containing materials having amino nitrogen or heterocyclic nitrogen and at least one amino or hydroxy group capable of salt, amide, imide or ester formation. Usually these dispersants are made by condensing a monocarboxylic acid or a dicarboxylic acid or anhydride, preferably a succinic acid producing material such as alkenyl succinic anhydride, with an amine or alkylene polyamine. Usually, the molar ratio of acid or anhydride to amine is between 1:1 to 5:1, e.g. 1 mole of $C_{10}$—$C_{100}$ polyisobutenyl succinic anhydride to 2 moles of tetraethylene pentamine.

Primarily because of its ready availability and low cost, the hydrocarbon portion of the mono-, or dicarboxylic acid or anhydride is preferably derived from a polymer of a $C_2$ to $C_5$ mono-olefin, said polymer generally having between 50 and 250 carbon atoms. A particularly preferred polymer is polyisobutylene.

Polyalkyleneamines are usually used to make the non-metal-containing dispersant. These polyalkyleneamines include those represented by the general formula:

$$NH_2(CH_2)_n—[NH(CH_2)_n]_m—NH_2$$

wherein n is 2 to 3 and m is a number from 0 to 10. Specific compounds coming within the formula include diethylenetriamine, tetraethylenepentamine, dipropylenetriamine, octaethyleneonamine, and tetrapropylenepentamine; N,N-di-(2-aminoethyl) ethylenediamine may also be used. Other aliphatic polyamino compounds that may be used are N-aminoalkylpiperazines, e.g. N-(2-aminoethyl) piperazine. Mixtures of alkylene polyamines approximating tetraethylene pentamine are commercially available, e.g. Dow E—100 sold by Dow Chemical Company of Midland, Michigan.

Representative dispersants are formed by reacting about one molar amount of polyisobutenyl succinic anhydride with from about one to about two molar amounts of tetraethylene pentamine or with from about 0.5 to 1 moles of a polyol, e.g. pentaerythritol.

It is possible to modify the ashless dispersants generally by the addition of metals such as boron in order to enhance the dispersancy of the additive. This is readily accomplished by adding boric acid to the reaction mixture after the imidation or esterification is substantially complete and heating the mixture at temperature of 100 to 150°C. for a few hours.

Detergents useful in conjunction with dispersants, preferably the ashless type, include normal, basic or overbased metal, e.g. calcium, magnesium, etc., salts of petroleum naphthenic acids, petroleum sulfonic acids, alkyl benzene sulfonic acids, oil-soluble fatty acids, alkyl salicyclic acids, alkylene-bis-phenols, and hydrolyzed phosphorosulfurized polyolefins.

Oxidation inhibitors include hindered phenols, e.g. 2,6-ditert butyl para-cresol, amines, sulfurized phenols and alkyl phenothiazines.

Pour point depressants include wax alkylated aromatic hydrocarbons, olefin polymers and copolymers, acrylate and methacrylate polymers and copolymers.

Viscosity Index improvers include olefin polymers such as polybutylene, ethylene-propylene copolymers, hydrogenated polymers and copolymers and terpolymers of styrene with isoprene and/or butadiene, polymers of alkyl acrylates or alkyl methacrylates, copolymers of alkyl methacrylates with N-vinyl pyrollidone or dimethylaminoalkyl methacrylate, post-grated polymers of ethylene-propylene with an active monomer such as maleic anhydride which may be further reacted with an alcohol or an alkylene polyamine, styrene/maleic anhydride polymers post-reacted with alcohols and amines, etc.

The hydrocarbons in which the additive combination of the invention is most effective are mineral oils having a viscosity as measured by ASTM D—445 of from about 2 to 40, preferably 5 to 20 centistokes ($mm^2$/second) at 99°C.

If the molybdenum-containing oxazoline dispersant is used as an additive concentrate, the concentrate may consist essentially of from about 5 to 80 weight percent of the oil soluble molybdenum complex, based on the total weight of said concentrate, the remainder being a suitable solvent such as kerosene, mineral oil, synthetic oil and a naphtha or the like. The preferred concentrate contains about 10—60 weight percent of the additive combination in the solvent.

Whether the molybdenized oxazoline dispersant is used alone or in combination with other additives, its concentration may vary appreciably with the particular application. For example, when the said molybdenum containing dispersants are used alone in a fuel such as gasoline, the concentration of the additive ranges from 1 to 1000, preferably 5—50 parts per million, based on the total weight of the gasoline. In a lubricant, however, it is used from about 0.1 to 20, preferably 0.5—5% based on the total weight of the oil. Products containing at least one oxazoline ring can be used as antirust agents, detergents, or dispersants for oleaginous compositions including lube oil, gasoline, turbine oils and oils for drilling applications.

The following Examples illustrate more clearly the compositions of the present invention.

Example 1

A mixture of 40 grams of a 50 wt.% mineral oil solution of a bisoxazoline dispersant [obtained from the reaction of one mole of polyisobutenyl ($\bar{M}_n$ of about 1300) succinic anhydride with about two moles of tris-(hydroxymethyl) aminomethane (THAM) to provide the bisoxazoline of polyisobutenyl succinic anhydride], 2.87 grams of molybdic oxide ($MoO_3 \cdot H_2O$), 50 cc of toluene and 5 cc of water were refluxed with stirring for 7.25 hours. During this time, water and toluene were removed by distillation. The reactants were freed from solid material by filtration and the filtrate stripped of volatile material by rotoevaporation. The product was a dark brown oil containing 3.56% molybdenum. This represents a conversion, based on molybdenum, of 79% on theory.

Example 2

The molybdated dispersant of Example 1 was evaluated in a formulated oil, for its effect on friction in a Roxana Four-Ball Test. As a comparative example, an oil containing the dispersant but without molybdenum was run. The concentration of the molybdenum-containing dispersant was adjusted to provide 0.1% molybdenum in the oil. A total dispersant concentration of 2.5% was maintained in all tests.

The lubricant composition was:

| Component | Wt.% Active Ingredient |
|---|---|
| Dispersant | 2.5 |
| Magnesium Sulfonate (overbased) | 0.4 |
| Zinc Dinonyl Phenoxy Dithiophosphate | 1.0 |
| Mineral Oil | 96.1 |

The Roxana Four-Ball wear tester with the Brown/GE modification from Roxana Machine Works, St. Louis, MO was used to measure friction properties by the following procedure. The tester was assembled in the normal wear procedure as described in ASTM D—2266—67 using four $\frac{1}{2}$" bearing steel balls. The tester was brought to 110°C. and run at 1200 rpm and 15 kg for a minimum of 45 minutes. If the frictional force as seen on the strip chart recorder is constant for the last 10 minutes, the speed is reduced to 25 rpm. Otherwise, the test is carried on until frictional force has stabilized. The test at 25 rpm is carried out at 110°C. and 15 kg for 15 minutes or until frictional force has stabilized.

The compound of the invention was evaluated by subjecting the product of Example 1 to a study of its utility as a lubricity enhancing and/or antiwear additive for lubricating oils by using said Testing Procedure.

The results of tests under said Testing Procedure A are set forth in the Table.

Example 3

224 grams of a 50 wt.% mineral oil solution of a polyisobutyl lactone oxazoline having a ($\overline{M}_n$) of 1120 (0.05 mole), 8.1 grams of $MoO_3 \cdot H_2O$ (0.05 moles) and 10 cc of water were stirred and refluxed (*ca.* 140°C.) in 200 cc of xylene for 4 hours. During this time, water and xylene were removed by distillation. The reactants were freed from solid material by filtration and the filtrate stripped of volatile material by rotoevaporation. The product was a 50 wt.% mineral oil solution of a dark brown oil containing 0.886 wt.% molybdenum.

From the foregoing, it is shown that the molybdenum-containing dispersant additives of the invention provide lubricity enhancement to lubricating oils superior to their non-molybdized counterparts when an active sulfur donor is present and that they have utility as additives for lubricating oils providing both sludge dispersancy and lubricity enhancement.

TABLE

COMPARISON OF MOLYBDENUM CONTAINING DISPERSANTS FOR FRICTION REDUCTION

| Test # | Molybdate Product of Example # | Weight % Active Ingredient* | Dispersant of Example # | Weight % Active Ingredient | Coefficient of Friction[1] | | Friction Reduction[2] | |
|---|---|---|---|---|---|---|---|---|
| | | | | | 1200 rpm | 50 rpm | 1200 rpm | 50 rpm |
| 1 | – | – | 1 | 2.5 | 0.096 | .106 | – | – |
| 2 | 1 | 1.9 | 1 | 1.1 | 0.053 | 0.045 | 45 | 58 |

(1) 15 kg load

(2) Relative to base case

* This was based upon the product oil of Example 1 which contained 50 wt. % mineral oil and 50 wt. % molybdenum containing dispersant

**Claims**

1. An oil-soluble molybdenum complex of an ashless oxazoline dispersant having from 0.5 to 20 wt.% molybdenum based on the weight of said dispersant, said oxazoline dispersant comprising one to two oxazoline rings and having an oil-solubilizing group in the form of a substantially saturated long chain hydrocarbon group containing at least 50 carbon atoms attached to an acid group.

2. The complex according to claim 1 wherein said oxazoline is a lactone oxazoline.

3. An oil-soluble molybdenum complex according to claim 1 wherein said dispersant is an oxazoline compound wherein the hydrocarbyl group has a number average molecular weight in the range of 700 to 250,000.

4. The complex according to claim 1 wherein said dispersant is the reaction product of a molybdenum compound with 0.5 to 1 molar equivalent of the mono- and bisoxazoline obtained as a reaction product of hydrocarbyl-substituted dicarboxylic acids, ester, or anhydride, with from 1 to 2 molar equivalents of a 2,2-disubstituted-2-amino-1-alkanol represented by the formula:

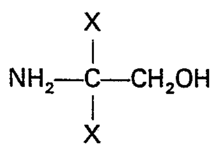

wherein X is an alkyl or hydroxy alkyl group, with at least one of the X substituents being a hydroxy alkyl group of the structure $—(CH_2)_nOH$, wherein n is 1 to 3.

5. The complex according to claim 2 wherein said dispersant is the reaction product of a molybdenum compound with 0.5 to 1 molar equivalent of a hydrocarbon substituted lactone oxazoline obtained as a reaction product of hydrocarbyl substituted lactone acid or ester, with from 1 to 1.5 molar equivalents of a 2,2-disubstitued-2-amino-1-alkanol represented by the formula:

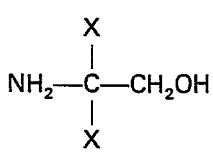

wherein X is an alkyl or hydroxy alkyl group, with at least one of the X-substituents being a hydroxy alkyl group of the structure $—(CH_2)_nOH$, wherein n is 1 to 3.

6. The complex according to claims 1—5 wherein said molybdenum compound is of the class consisting of molybdic trioxide, ammonium thiomolybdate, molybdic anhydride, ammonium bismolybdate, molybdenum halides, or ammonium heptmolybdate tetrahydrate.

7. The complex according to claims 1—6 wherein said dispersant contains up to 10 wt.% molybdenum.

8. The complex according to claims 1—7 wherein said dispersant is borated and contains 0.1 to 2.0 wt.% boron, based on total weight of dispersant.

9. A hydrocarbon composition comprising a major proportion of a hydrocarbon and at least a friction-reducing amount of an oil soluble molybdenum complex according to any of claims 1 to 8.

10. A hydrocarbon composition according to claim 9 wherein the hydrocarbon composition is a lubricating oil composition comprising a major proportion of mineral oil and a minor but friction-reducing amount of the oil-soluble molybdenum complex of claim 1.

11. A hydrocarbon composition according to claim 9 wherein the hydrocarbon composition is a gasoline having improved antiwear properties containing from 1 to 1,000 parts per million of an oil soluble molybdenum complex according to claims 1 to 8.

12. A hydrocarbon composition according to claim 9 further containing an oil-soluble active sulfur donor, said combination providing from 0.01 to 2.0 weight percent molybdenum and said sulfur donor being present in an amount of from 0.1 to 10 parts by weight per part by weight of the molybdenum complex.

13. A hydrocarbon composition according to claim 12 wherein said hydrocarbon is mineral oil, said complex is oil-soluble and derived from the reaction product of one mole of a hydrocarbyl-substituted dicarboxylic acid material wherein said hydrocarbyl substituent is a polymer of a $C_2$—$C_5$ monoolefine and has a $(M_n)$ ranging from 700 to 5600 reacted with one to two moles of a 2,2-disubstituted-2-amino-1-alkanol represented by the formula:

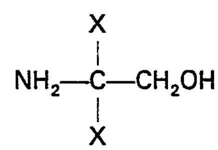

wherein X is an alkyl or hydroxy alkyl group, with at least one of the X substituents being a hydroxy alkyl group of the structure $—(CH_2)_nOH$ where n is 1 to 3, said reaction product being complexed with from 1 to 2 molar equivalents of molybdic oxide, and said sulfur donor is an oil-soluble dihydrocarbyl ester of di-thiophosphoric acid.

14. A hydrocarbon composition according to claim 13 wherein said mineral oil has a viscosity as measured by ASTM—D—445 of from about 2 to 40 centistokes (mm²/second) at 99°C., said substituted dicarboxylic acid material is poly(isobutenyl) succinic anhyride wherein said poly(isobutenyl) group has a $(M_n)$ ranging from 900 to 1600, and reacted with from 1.5 to 2 moles of said alkanol being *tris*-(hydroxymethyl)aminomethane and said active

sulfur donor is zinc dihydrocarbyl dithiophosphate present in an amount of from 0.2 to 2 parts by weight per parts by weight of said molybdenum complex which is present in an amount of from 0.02 to 1.0 wt% based upon composition.

15. A concentrate comprising from 5 to 80 weight percent of the combination of an oil-soluble molybdenum complex according to any one of claims 1 to 8, and from about 0.1 to 10 parts by weight of active sulfur donor per part by weight of said complex and 20 to 95 weight percent of mineral oil.

**Patentansprüche**

1. Öllöslicher Molybdänkomplex eines aschefreien Oxazolin-Dispersionsmittels mit bezogen auf das Gewicht des Dispersionsmittels 0,5 bis 20 Gew.% Molybdän, wobei das Oxazolin-Dispersionsmittel einen oder zwei Oxazolinringe und eine öllöslich machende Gruppe in Form einer im wesentlichen gesättigten, langkettigen, an eine Säuregruppe gebundenen Kohlenwasserstoffgruppe mit mindestens 50 Kohlenstoffatomen aufweist.

2. Komplex nach Anspruch 1, dadurch gekennzeichnet, daß das Oxazolin ein Lactonoxazolin ist.

3. Öllöslicher Molybdänkomplex nach Anspruch 1, dadurch gekennzeichnet, daß das Dispersionsmittel eine Oxazolinverbindung ist, in der die Hydrocarbylgruppe ein zahlendurchschnittliches Molekulargewicht im Bereich von 700 bis 250.000 besitzt.

4. Komplex nach Anspruch 1, dadurch gekennzeichnet, daß das Dispersionsmittel das Reaktionsprodukt einer Molybdänverbindung mit 0,5 bis 1 Moläquivalenten des Mono- und Bis-Oxazolins ist, das als Reaktionsprodukt von hydrocarbylsubstituierten Dicarbonsäuren, Estern oder Anhydriden mit 1 bis 2 Molequivalenten eines 2,2-disubstituierten-2-Amino-1-alkanols gemäß der Formel

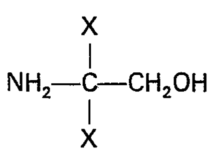

erhalten wird, wobei X eine Alkyl- oder Hydroxyalkylgruppe bedeutet, wobei mindestens eine der X-Gruppen eine Hydroxyalkylgruppe der Struktur-$(CH_2)_nOH$ ist, in der n 1 bis 3 ist.

5. Komplex nach Anspruch 1, dadurch gekennzeichnet, daß das Dispersionsmittel das Reaktionsprodukt einer Molybdänverbindung mit 0,5 bis 1 Moläquivalenten eines kohlenwasserstoffsubstituierten Lactonoxazolins ist, das als Reaktionsprodukt von hydrocarbylsubstituierter Lactonsäure oder -ester mit 1 bis 1,5 Moläquivalenten eines 2,2-disubstituierten-2-Amino-1-alkanols gemäß der Formel

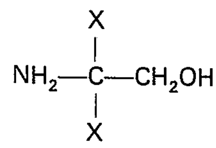

erhalten wird, in der X eine Alkyl- oder Hydroxyalkylgruppe ist, wobei mindestens eine der X-Gruppen eine Hydroxylalkylgruppe mit der Struktur-$(CH_2)_nOH$ ist, in der n 1 bis 3 ist.

6. Komplex nach den Ansprüchen 1 bis 5, dadurch gekennzeichnet, daß die Molybdänverbindung eine Verbindung aus der Klasse bestehend aus Molybdäntrioxid, Ammoniumthiomolybdat, Molybdänsäureanhydrid, Ammoniumbismolybdat, Molybdänhalogeniden oder Ammoniumheptamolybdattetrahydrat ist.

7. Komplex nach den Ansprüchen 1 bis 6, dadurch gekennzeichnet, daß das Dispersionsmittel bis zu 10 Gew.% Molybdän enthält.

8. Komplex nach den Ansprüchen 1 bis 7, dadurch gekennzeichnet, daß das Dispersionsmittel boriert ist und 0,1 bis 2,0 Gew.% Bor bezogen auf das Gesamtgewicht des Dispersionsmittels enthält.

9. Kohlenwasserstoffzusammensetzung mit einem größeren Anteil Kohlenwasserstoff und zumindest einer die Reibung verringernden Menge eines öllöslichen Molybdänkomplexes gemäß irgendeinem der Ansprüche 1 bis 8.

10. Kohlenwasserstoffzusammensetzung nach Anspruch 9, dadurch gekennzeichnet, daß sie eine Schmierölzusammensetzung mit einem größeren Anteil eines Mineralöls und einer untergeordneten aber die Reibung verringernden Menge des öllöslichen Molybdänkomplexes gemäß Anspruch 1 ist.

11. Kohlenwasserstoffzusammensetzung nach Anspruch 9, dadurch gekennzeichnet, daß sie ein Benzin mit verbesserten Antiabnutzungseigenschaften ist, das 1 bis 1000 ppm eines öllöslichen Molybdänkomplexes gemäß den Ansprüchen 1 bis 8 enthält.

12. Kohlenwasserstoffzusammensetzung nach Anspruch 9, dadurch gekennzeichnet, daß sie weiterhin eine öllöslichen aktiven Schwefeldonor enthält, wobei die Kombination etwa 0,01 bis 2,0 Gew.% Molybdän liefert und der Schwefeldonor in einer Menge von 0,1 bis 10 Gew.-teilen je Gew.-teil des Molybdänkomplexes vorhanden ist.

13. Kohlenwasserstoff-zusammensetzung nach Anspruch 12, dadurch gekennzeichnet, daß der Kohlenwasserstoff Mineralöl ist, der Komplex öllöslich und aus dem Reaktionsprodukt von einem Mol eines hydrocarbylsubstituierten Dicarbonsäurematerials, wobei der Hydrocarbylsubstituent ein Polymer eines $C_2$—$C_5$-Monoolefins ist und ein ($M_n$) von 700 bis 5600 hat, mit einem bis zwei Mol eines 2,2-disubstituierten-2-Amino-1-alkanols gemäß der Formel

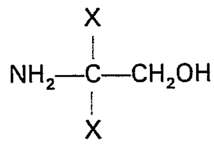

in der X eine Alkyl- oder Hydroxyalkylgruppe ist, wobei mindestens eine der X-Gruppen eine Hydroxyalkylgruppe der Struktur-$(CH_2)_nOH$ ist, in der n 1 bis 3 ist, hergestellt ist, dieses Reaktionsprodukt mit 1 bis 2 Moläquivalenten Molybdäntrioxid komplexiert ist und der Schwefeldonor ein öllöslicher Dihydrocarbylester von Dithiophosphorsäure ist.

14. Kohlenwasserstoffzusammensetzung nach Anspruch 13, dadurch gekennzeichnet, daß das Mineralöl eine nach ASTM—D—445 gemessene Viskosität von etwa 2 bis 40 Centistoke ($mm^2$/sek.) bei 99°C besitzt, das substituierte Dicarbonsäurematerial Poly(isobutenyl)bernsteinsäureanhydrid ist, wobei die Poly(isobutenyl)-Gruppe ein ($M_n$) von 900 bis 1600 besitzt, und mit 1,5 bis 2 Mol des Alkanols, bei dem es sich um Tris(hydroxymethyl)aminomethan handelt, umgesetzt ist und der aktive Schwefeldonor Zinkdihydrocarbyldithiophosphat in einer Menge von 0,2 bis 2 Gew.-teilen je Gew.-teil des Molybdänkomplexes, der in einer Menge von 0,02 bis 1 Gew.% bezogen auf das Gesamtgewicht der Zusammensetzung vorhanden ist, ist.

15. Konzentrat enthaltend 5 bis 80 Gew.% der Kombination eines öllöslichen Molybdänkomplexes gemäß irgendeinem der Ansprüche 1 bis 8 mit 0,1 bis 10 Gew.-teilen aktivem Schwefeldonor je Gew.-teil des Komplexes und 20 bis 95 Gew.% Mineralöl.

**Revendications**

1. Complexe de molybdène soluble dans les huiles formé d'un dispersant oxazolinique sans cendres contenant 0,5 à 20% en poids de molybdène sur la base du poids dudit dispersant, ledit dispersant oxazolinique comprenant un ou deux noyaux d'oxazoline et ayant un groupe oléosolubilisant sous la forme d'un groupe hydrocarboné à longue chaîne principalement saturée contenant au moins 50 atomes de carbone, lié à un groupe acide.

2. Complexe suivant la revendication 1, dans lequel ladite oxazoline est une lactone-oxazoline.

3. Complexe de molybdène soluble dans les huiles suivant la revendication 1, dans lequel le dispersant est un composé d'oxazoline dont le groupe hydrocarbyle a une moyenne en nombre du poids moléculaire comprise dans la plage de 700 à 250 000.

4. Complexe suivant la revendication 1, dans lequel ledit dispersant est le produit de réaction d'un composé de molybdène avec 0,5 à 1 équivalent molaire de la mono- et de la bis-oxazoline obtenues comme produit de réaction d'acides, d'esters ou d'anhydrides dicarboxyliques à substituant hydrocarbyle, avec 1 à 2 équivalents molaires d'un 2-amino-1-alcanol disubstitué en position 2 représenté par la formule:

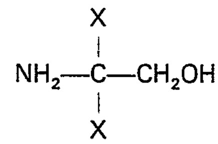

dans laquelle X est un groupe alkyle ou hydroxyalkyle, l'un au moins des substituants X étant un groupe hydroxyalkyle de formule $—(CH_2)_nOH$, dans laquelle *n* a une valeur de 1 à 3.

5. Complexe suivant la revendication 2, dans lequel ledit dispersant est le produit de réaction d'un composé de molybdène avec 0,5 à 1 équivalent molaire d'une lactone-oxazoline à substituant hydrocarboné obtenue comme produit de réaction d'un acide ou ester de lactone à substituant hydrocarbyle, avec 1 à 1,5 équivalent molaire d'un 2-amino-1-alcanol disubstitué en position 2 représenté par la formule:

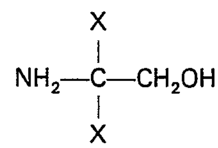

dans laquelle X est un groupe alkyle ou hydroxyalkyle, l'un au moins des substituants X étant un groupe hydroxyalkyle de formule $—(CH_2)_nOH$, dans laquelle *n* a une valeur de 1 à 3.

6. Complexe suivant les revendications 1—5, dans lequel ledit composé de molybdène appartient à la classe comprenant le trioxyde molybdique, le thiomolybdate d'ammonium, l'anhydride molybdique, le bismolybdate d'ammonium, les halogénures de molybdène ou l'heptamolybdate d'ammonium tétrahydraté.

7. Complexe suivant les revendications 1—6, dans lequel ledit dispersant contient jusqu'à 10% en poids de molybdène.

8. Complexe suivant les revendications 1—7, dans lequel ledit dispersant est boraté et contient 0,1 à 2,0% en poids de bore, sur la base du poids total de dispersant.

9. Composition hydrocarbonée, comprenant une proportion dominante d'un hydrocarbure et une quantité au moins apte à réduire la friction d'un complexe de molybdène soluble dans les huiles suivant l'une quelconque des revendications 1 à 8.

10. Composition hydrocarbonée suivant la revendication 9, qui est une composition d'huile lubrifiante comprenant une proportion dominante d'huile minérale et une quantité plus faible mais apte à réduire la friction du complexe de molybdène soluble dans les huiles suivant la revendication 1.

11. Composition hydrocarbonée suivant la revendication 9, qui est une essence dont les

propriétés antiusure sont améliorées et qui contient 1 à 1000 parties par million d'un complexe de molybdène soluble dans les huiles suivant les revendications 1 à 8.

12. Composition hydrocarbonée suivant la revendication 9, contenant en outre un donneur de soufre actif soluble dans les huiles, ladite association apportant environ 0,01 à 2,0% en poids de molybdène et ledit donneur de soufre étant présent en une quantité de 0,1 à 10 parties en poids par partie en poids du complexe de molybdène.

13. Composition hydrocarbonée suivant la revendication 12, dans laquelle l'hydrocarbure est une huile minérale, le complexe est soluble dans l'huile et est dérivé du produit de réaction d'une mole d'une matière de type acide dicarboxylique à substituant hydrocarbyle dont le substituant hydrocarbyle est un polymère d'une mono-oléfine en $C_2$ à $C_5$ et a une valeur ($\overline{M}_n$) de 700 à 5600, ayant réagi avec une à deux moles d'un 2-amino-1-alcanol disubstitué en position 2 représenté par la formule:

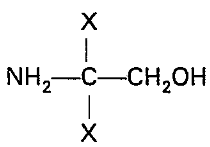

dans laquelle X est un groupe alkyle ou hydroxyalkyle, l'un au moins des substituants X étant un groupe hydroxyalkyle de formule $-(CH_2)_nOH$, dans laquelle *n* a une valeur de 1 à 3, ledit produit de réaction étant complexé avec 1 à 2 équivalents molaires d'oxyde molybdique et ledit donneur de soufre est un ester de dihydrocarbyle d'acide dithiophosphorique soluble dans les huiles.

14. Composition hydrocarbonée suivant la revendication 13, dans laquelle l'huile minérale a une viscosité, mesurée par la méthode ASTM D—445, d'environ 2 à 40 centistokes ($mm^2$/seconde) à 99°C, ladite matière acide dicarboxylique substituée étant un anhydride poly(isobutényl)succinique dont le groupe poly-(isobutényle) a une valeur ($\overline{M}_n$) de 900 à 1600, et ayant réagi avec 1,5 à 2 moles dudit alcanol qui est le *tris*-(hydroxyméthyl)aminométhane, et ledit donneur de soufre actif est un dihydrocarbyldithiophosphate de zinc présent en une quantité de 0,2 à 2 parties en poids par partie en poids dudit complexe de molybdène qui est présent en une quantité de 0,02 à 1.0% en poids sur la base du poids total de ladite composition.

15. Concentré comprenant 5 à 80% en poids de l'association entre un complexe de molybdène soluble dans les huiles suivant l'une quelconque des revendications 1 à 8 et environ 0,1 à 10 parties en poids d'un donneur de soufre actif par partie en poids dudit complexe et 20 à 95% en poids d'huile minérale.